# EUROPEAN PATENT SPECIFICATION

(11) **EP 1 731 872 B1**
(45) Date of publication and mention of the grant of the patent: **20.11.2013**
(21) Application number: 06252934.2
(22) Date of filing: 06.06.2006
(51) Int. Cl.: G01C 15/00

(54) **Device for and method of surveying the interior layout of buildings**
Vorrichtung und Verfahren zur Vermessung der Innenräume von Gebäuden
Dispositif et procédé de mesurage des intérieurs des bâtiments

(30) Priority: 07.06.2005 GB 0511501
(43) Date of publication of application: 13.12.2006
(73) Proprietor: Planscriber Limited, Norwich Norfolk NR14 8GE (GB)
(72) Inventor: Townend, David Colin, Norwich Norfolk NR14 8GE (GB)
(74) Representative: Wilson, Peter David George

(56) References cited:
- US-A- 5 337 149
- US-A- 5 956 661
- US-B1- 6 446 030
- TSENG A A ET AL: "Laser-based internal profile measurement system" AUTOMATION IN CONSTRUCTION ELSEVIER NETHERLANDS, vol. 11, no. 6, October 2002 (2002-10), pages 667-679, XP009102328 ISSN: 0926-5805

## Description

### Field of the Invention

The present invention concerns a method for surveying the interior layout of a building.

### Background to the Invention

When undertaking structural or decorative work on the interior of a building it is important to be able to determine the layout of the walls and other surfaces in the building and also to ascertain where items of furniture are situated. Traditionally, a surveyor, architect, designer etc. has relied primarily on a tape measure to determine the dimensions and the layout: said dimensions being subsequently used to produce a hand-drawn hard copy drawing which includes the location of those internal walls and furniture. In recent years, hand-held laser devices have largely replaced the use of a tape measure, but the principal remains the same.

Such a method is however quite time consuming and can often result in an inaccurate depiction of the layout. Although more modern buildings in which the walls tend to be of constant thickness and which are laid in a regular fashion are relatively easy to survey, the above method becomes quite difficult with, for example, older buildings. These often have irregularly shaped rooms and walls which are not of uniform thickness along their length.

GB 2 238 871 attempts to overcome the difficulties by the use of a relatively complex arrangement of mirrors or prisms to reflect a beam of light and determine a phase change in the reflected light.

US 5/956,661 discloses a complex means of determining the layout of a building including the use of at least three laser emitters.

US 6/446,030 discloses algorithms for use in conjunction with a laser range finder.

"Automation in Construction" (2002) 667-79) discloses a means of determining a room layout utilising a rotating prism.

US 5/337,149 discloses a computerised three dimensional data acquisition apparatus and method for acquiring, inputting, and graphically displaying data concerning large three dimensional objects and spaces.

It is an object to seek to address the above problems and describe an improved device for use in surveying a building. It is an object of the invention to provide an improved method of surveying internal structure in a building.

### Summary of the Invention

The inventor describes a device for use in determining the layout of a building, the device including:
a recording means to capture the distances determined by the range finder;
a single laser emitting range finder to determine the distance to a surface by emission of a laser light beam and subsequent detection of the reflected light from the surface;
and includes a mounting means to rotationally support the range finder, allowing the range finder to rotate in a horizontal plane;

The mounting means advantageously includes a vertical shaft to support the range finder. Particularly advantageously, the shaft includes means to measure the rotational displacement of the range finder. The measurement enables an accurate value to be ascribed to the orientation of the range finder. The range finder is advantageously retained in a cradle, mounted to the mounting means. The cradle provides a robust means of supporting the range finder. Preferably, the range finder is so mounted that the rear surface of the range finder is directly above the vertical shaft.

Rotation of the range finder is optionally under the control of a remotely issued radio signal. Alternatively, the rotation can be controlled manually.

Rotation is advantageously effected by a stepper motor, the speed of rotation particularly advantageously being variable. This allows rapid movement between the positions, from which a measurement is to be made.

The device advantageously includes a display means to display the information such as angle or distance to the surface at which the device is aimed.

Optionally, the device is linked to a computer to store data. Advantageously, the device includes means to provide a visual image of the layout of a building. An accurate plan of a building can therefore be obtained quickly.

According to the invention there is provided a method of determining the layout of a building, the method including the steps of :-
(i) taking a single laser emitting range finder (11) capable of measuring the distance to a surface by the emission of an emitted laser beam;
(ii) rotatably mounting said range finder on a first tripod in a first room such that the beam emitted is in the horizontal plane and the range finder is rotated in a single plane;
(iii) causing a beam to be emitted and thereby measuring the distance to the surface;
(iv) determining the angle of rotation of the range finder (11);
(v) assigning coordinates to the surface;
(vi) storing the data from one or more steps (iii) - (v);
(vii) aiming the laser beam of the range finder at a target fitted to a second tripod located in a second room and taking a reading;
(viii) interchanging the positions of the target and the range finder;
(ix) using the new location of the range finder to determine the location of surfaces in the second room according to steps (iii) to (v) above.

Advantageously, the data accumulated from repeated application of steps (iii) - (ix) are used to determine the layout of the building. Particularly advantageously the method includes the further step of obtaining an image of said building layout.

### Brief Description of the Drawing

The invention will now be described with reference to the accompanying drawing which shows by way of example only, one embodiment of the described/disclosed surveying device. In the drawing:

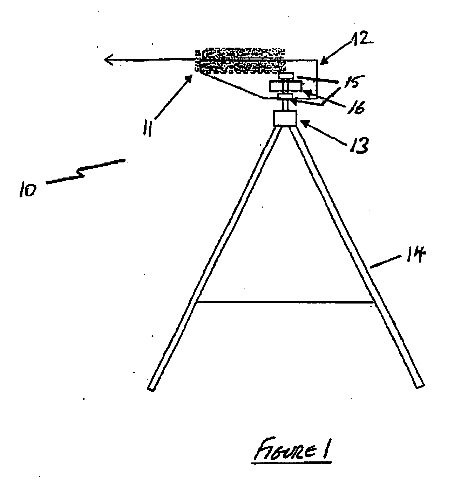

Figure 1 illustrates a range finder mounted for use.

### Detailed Description of the Invention

With reference to Figure 1, the device 10 disclosed is suitable for determining and depicting the layout of the building. The device is for use by surveyors, architects, interior designers and the like.

In summary, the device 10 includes a measuring means to assist in determining the relative location of walls or furniture. The measuring means is mounted on a stable support and is capable of pivoting through 360° of a plane. The precise orientation of the measuring means can be determined and this orientation together with the distance to the next object can be stored in a memory. The device can moreover include means for processing the data obtained and producing an image of a room's or of a building's layout from the data.

In more detail, the device 10 has a range finder 11 which is capable of emitting a laser light beam at a wave length conventional in such instruments. The range finder 11 is housed in a cradle unit 12 which unit 12 is mounted for rotation about a fixed, vertically orientated shaft 13 projecting from a tripod support stand 14. In the embodiment shown, the rear surface of the range finder 11 is directly on the axis line of the vertical shaft 13 to provide a constant reference. The vertical shaft 13 is provided with bearing mounts 15 to enable the rotation of the range finder 11 to take place. The shaft 13 also includes a digital rotary encoder 16 which generates information on the direction in which the range finder 11 is pointing.

Rotation about the shaft 13 is effected in one of a number of ways. In one alternative, a stepper motor is employed to ensure a smooth action. The stepper motor can be set at different speeds to enable the user either to move rapidly between orientations from which a measurement is to be taken or to approach a particular orientation slowly and hence more precisely. Alternatively, mechanical means can be used to rotate the range finder. Such mechanical means can be in the form of a series of rotatable knobs on the side of the device, operatively connected to a drive mechanism.

The device includes data storage elements linked to the range finder 11 by a cable along which the data is transmitted. As the measured distance is transmitted, the co-ordinates determined from the rotary encoder 16 are also transmitted thereby providing the co-ordinates of the surfaces being measured.

Once the co-ordinates have been determined, they can be either used to provide a computer screen display through the information being converted into, for example, AutoCad language. A printer is provided to enable a hard copy of the drawings to be obtained.

In use therefore, the device 10 is set up in a first location, for example a room, such that the range finder 11 is orientated in the horizontal plane. Rotation of the range finder 11, within that horizontal plane is then initiated to a pre-determined point and a measurement taken. Initiation can be through the operation of a control, physically connected to the range finder or by a control operating remotely. Once the measurement has been taken, the range finder's rotation is continued, with data being collected at various points as above.

Once sufficient data has been collected from the first location, a second tripod is located in a second room. The second tripod is fitted with a target such as cross-hairs or the like. The laser of the range finder is aimed at the target and a reading taken. The positions of the target and the range finder are then interchanged and the new location of the range finder used to determine the location of surfaces in the second room. This process is continued until all rooms required have been surveyed.

The information gathered can be transferred either to an on site computer or to a computer at a location remote from the survey site. The latter transfer can be effected for example by a radio-link from the on-site device to a receiver pod plugged into a serial port or USB port of a remote computer. Alternatively, transfer can be via a memory stick or smart card. The receiver pod also contains a memory chip which feeds an operating plug-in programme into the computer. The information is converted into AutoCad language allowing the survey to be drawn on the screen.

A number of further or alternative features can be included which do not depart from the general scope of the invention. Firstly, the key pad can be located on the device itself or on any remote control unit which allows the user to type in the measured distance or other pertinent information. This allows alternative proprietary range-finders to be used.

In an alternative embodiment of the described/disclosed device, not illustrated, the laser of the range finder is orientated in a vertical direction and held against a wall. The vertically emitted beam is reflected by a mirror to the horizontal plane and measurements carried out in an analogous way to that described above.

It will of course be understood that the invention is not limited to the specific details described herein, which are given by way of example only, and that various modifications and alterations are possible with the scope of the appended claims.

## Claims

1. A method of determining the layout of a building, the method including the steps of:
(i) taking a single laser emitting range finder (11) capable of measuring the distance to a surface by the emission of an emitted laser beam;
(ii) rotatably mounting said range finder in a first room on a first tripod (14) such that the beam emitted is in the horizontal plane and the range finder is rotated in a single plane;
(iii) causing a beam to be emitted and thereby measuring the distance to the surface;
(iv) determining the angle of rotation of the range finder (11);
(v) assigning coordinates to the surface;
(vi) storing the data from one or more steps (iii) - (v);
(vii) aiming the laser beam of the range finder at a target fitted to a second tripod located in a second room and taking a reading;
(viii) interchanging the positions of the target and the range finder;
(ix) using the new location of the range finder to determine the location of surfaces in the second room according to steps (iii) to (v) above.

2. A method according to claim 1, **characterised in that** the data accumulated from repeated application of steps (iii) - (ix) are used to determine the layout of the building.

3. A method according to Claim 1 or Claim 2, **characterised in that** the method includes the further step of obtaining an image of said building layout.

## Patentansprüche

1. Methode zur Ausarbeitung eines Gebäudelayouts, wobei die Methode folgende Schritte einbezieht:
(i) Benutzung eines Laserstrahl Entfernungsmessers (11), der die Messung der Entfernung einer Fläche mit einem emittierten Laserstrahl gestattet.;
(ii) drehbare Montage des besagten Entfernungsmessers (in einem ersten Raum) auf einem ersten Stativ (14), sodass der emittierte Strahl in waagerechter Ebene verläuft und der Entfernungsmesser in einer Ebene drehbar ist
(iii) Auslösung eines Laserstrahls und so Messung der Entfernung bis zu der Fläche;
(iv) Bestimmung des Drehwinkels des Entfernungsmessers (11);
(v) Zuordnung von Koordinaten zu der Fläche;
(vi) Speicherung der Daten eines oder mehrerer der Schritte (iii) - (v);
(vii) Ausrichtung des Laserstrahls des Entfernungsmessers auf ein Ziel, das auf einem zweiten Stativ in einem zweiten Raum montiert ist und Bestimmung eines Messwerts;
(vii) Die Positionen des Ziels und des Entfernungsmessers gegeneinander austauschen;
(ix) Unter Benutzung des Entfernungsmessers in seiner neuen Lage die Lage von Flächen in dem zweiten Raum in der obigen Schrittfolge (iii) bis (v) bestimmen.

2. Methode gemäß Anspruch 1, **dadurch gekennzeichnet, dass** die während der wiederholten Ausführung der Schritte (iii) - (ix) gesammelten Daten zur Ausarbeitung des Gebäudelayouts benutzt werden.

3. Methode gemäß Anspruch 1 oder Anspruch 2, **dadurch gekennzeichnet, dass** die Methode den weiteren Schritt der Ausarbeitung einer Bildsarstellung des besagten Gebäudelayouts einbezieht.

## Revendications

1. Procédé permettant de déterminer le plan d'un bâtiment, le procédé comprenant les étapes consistant à :
(i) mettre en oeuvre un télémètre à laser unique (11) capable de mesurer la distance jusqu'à une surface par l'émission d'un faisceau laser émis ;
(ii) monter de manière rotative ledit télémètre dans une première pièce sur un premier trépied (14) de telle sorte que le faisceau émis se trouve dans le plan horizontal et le télémètre est tourné dans un seul plan ;
(iii) amener un faisceau à être émis et de ce fait mesurer la distance jusqu'à la surface ;
(iv) déterminer l'angle de rotation du télémètre (11) ;
(v) affecter des coordonnées à la surface ;
(vi) stocker les données provenant d'une ou de plusieurs étapes (iii) à (v) ;
(vii) diriger le faisceau laser du télémètre vers une cible placée sur un second trépied se trouvant dans une seconde pièce et prendre un relevé ;
(viii) échanger les positions de la cible et du télémètre ;
(ix) utiliser le nouvel emplacement du télémètre pour déterminer l'emplacement des surfaces dans la seconde pièce selon les étapes (iii) à (v) ci-dessus.

2. Procédé selon la revendication 1, **caractérisé en ce que** les données accumulées par la mise en oeuvre des étapes (iii) à (ix) sont utilisées pour déterminer le plan du bâtiment.

3. Procédé selon la revendication 1 ou la revendication 2, **caractérisé en ce que** le procédé comprend l'étape supplémentaire consistant à obtenir une image dudit plan du bâtiment.
